# EUROPÄISCHE PATENTSCHRIFT

(11) **EP 4 088 923 B1**
(45) Veröffentlichungstag und Bekanntmachung des Hinweises auf die Patenterteilung: **10.04.2024**
(21) Anmeldenummer: 21173253.2
(22) Anmeldetag: 11.05.2021
(51) Int. Cl.: B32B 7/12, B32B 15/20, B32B 15/095

(54) **FORMTEIL MIT ERHÖHTER STABILITÄT ZUR HERSTELLUNG VON MÖBELSTÜCKEN UND VERFAHREN ZU DESSEN HERSTELLUNG UND VERWENDUNG**
MOULDING WITH INCREASED STABILITY FOR THE MANUFACTURE OF PIECES OF FURNITURE AND METHOD FOR ITS MANUFACTURE AND USE
PIÈCE MOULÉE À STABILITÉ ACCRUE DESTINÉE À LA FABRICATION DE PIÈCES DE MEUBLE ET SON PROCÉDÉ DE FABRICATION ET SON UTILISATION

(43) Veröffentlichungstag der Anmeldung: 16.11.2022
(73) Patentinhaber: Oskar GmbH, 63911 Klingenberg (DE)
(72) Erfinder: KARA, Maximilian, 63739 Aschaffenburg (DE); KRAUSS, Martin, 64750 Lützelbach (DE)
(74) Vertreter: Meyer-Dulheuer MD Legal Patentanwälte PartG mbB

(56) Entgegenhaltungen:
- WO-A1-2020/020545
- DE-A1- 10 228 473
- US-A- 4 385 131

## Beschreibung

Die Erfindung betrifft ein Formteil aus einem Polyurethanstück und zwei Außenschichten aus Aluminium, welches aufgrund seines Aufbaus zur Herstellung von Möbelstücken geeignet ist und aufgrund der Zusammensetzung des Polyurethanstücks und seiner Herstellung eine erhöhte Stabilität gegenüber den herkömmlichen Formteilen aus dem Stand der Technik, die bei der Herstellung von Möbelstücken genutzt werden, aufweist. Die Erfindung betrifft auch ein Verfahren zur Herstellung des Formteils und die Verwendung des Formteils zur Herstellung von Möbelstücken und die daraus hergestellten Möbelstücke.

Möbelstücke sind in der Menschheitsgeschichte schon seit Langem bekannt und können aus vielerlei Werkstoffen hergestellt werden. Als sehr geeignet für Möbelstücke hat sich Aluminium erwiesen, weil dieses ein geringes spezifisches Gewicht und eine gute mechanische Stabilität aufweist. Dadurch können Möbelstücke hergestellt werden, die leicht tragbar und auch haltbar und belastbar sind. Zudem ist Aluminium beständig in Luft und kann so behandelt werden, dass es eine glänzende und visuell ansprechende Oberfläche aufweist. Das Aluminium wird dabei meist in Form von Rohren oder Röhren bereitgestellt, aus denen ihrerseits die tragenden Rahmen der Möbelstücke hergestellt werden. Auch Wände oder Wandstücke können je nach gewünschter Konstruktion des Möbelstückes aus Aluminium, bespielsweise in Form von Platten, hergestellt werden.

Bei der Herstellung der Möbelstücke ergibt sich das Problem, dass die für die Herstellung des Möbelstücks vorgesehenen Teile gegeneinander befestigt werden müssen. Bei der gegenseitigen Befestigung der Teile werden sehr oft Schraubverbindungen angewandt. Diese haben den Vorteil, wieder lösbar zu sein und können außerdem für den gewünschten Zweck bereitgestellt werden, indem diese beispielsweise je nach gewünschter Befestigungsstärke eine bestimmte Schraubtiefe aufweisen. Die Aluminiumstruktur ist jedoch oftmals für Schraubgewinde weniger geeignet, weil diese keine ausreichende Dicke aufweist und viele Aluminiumteile, die zur Herstellung von Möbelstücken vorgesehen sind, hohl sind. Aus diesem Grund wurden im Stand der Technik Lösungen vorgeschlagen, die den inneren Hohlraum der zur Herstellung von Möbelstücken vorgesehenen Aluminiumteile mit Füllstoffen versehen, die das Gewicht von Möbelstücken nur unwesentlich ansteigen lassen, die Hohlräume jedoch zur verbesserten mechanischen Festigkeit mit Feststoff ausfüllen.

Das Dokument CN102242560A beschreibt ein mattiertes Verbundmaterial aus einem Aluminium-Plastik-Verbundmaterial, welches aufeinanderfolgend aus einer mattierten Aluminiumplatte, einem ersten Polymerbindefilm, einer Polyurethan-Innenschicht, einem Polymerklebefilm und einer weiteren Aluminiumplatte mit insgesamt fünf Schichten besteht. Dieses auf einer Seite mattierte Verbundmaterial wird insbesondere zur Herstellung von Möbelstücken gehobener Qualität bespielsweise in Innenräumen und Automobilen verwendet. Das Dokument gibt keinerlei Hinweise zur Konstruktion der Möbelstücke selbst und auch nicht zur mechanischen Festigkeit des beschriebenen Verbundmaterials.

Das Dokument EP2796258A2 beschreibt einen zweidimensionalen elektrischen Oberflächenleiter mit einer Isolierschicht, welcher eine 5 mm dicke Schicht aus Polyurethanschaum, zwei elektrisch leitende Aluminiumfolien, zwei Schichten aus einem 5 mm dicken Naturkorkagglomerat, außerdem LED-Leuchtdioden mit Elektroden verschiedener Länge, die an ihrem Ende eine Epoxid-Lackschicht zur Isolation aufweisen, und eine Stromquelle umfasst. Der Oberflächenleiter bietet durch die Korkschicht eine isolierende und gleichzeitig mechanisch flexible Innenschicht zum Einbau von elektrischen Komponenten zur Herstellung eines elektrischen Bauteils mit einer elektrisch leitenden Oberfläche. Das Dokument erwähnt auch die mögliche Herstellung von Möbelstücken aus dem zweidimensionalen elektrischen Oberflächenleiter. Das Dokument gibt ebenfalls keinerlei Hinweise zur Konstruktion der Möbelstücke selbst und auch nicht zur mechanischen Festigkeit des beschriebenen zweidimensionalen elektrischen Oberflächenleiters.

Das Dokument WO2020020545A1 betrifft die Verwendung eines mehrlagigen Schichtaufbaus für ein Element zur Verwendung als ein Boden-, Wand-, Decken-, Möbel-, Dekorations-, Innenausbauelement. Das Dokument offenbart jedoch keine spezielle Innenschicht, die eine genügende mechanische Festigkeit und Tiefe zur Befestigung von verbindenden Befestigungsmitteln wie Schrauben hat.

Es wird deshalb nach Werkstoffen für die Herstellung von Möbelstücken gesucht, die aus Aluminium als strukturgebendem Bestandteil aufgebaut sind und die in ihrem Inneren einen Füllstoff aufweisen, der eine genügende mechanische Festigkeit und Tiefe besitzt zur Befestigung von verbindenden Befestigungsmitteln. Diese verbindenden Befestigungsmittel sind typischerweise Schrauben. Der Werkstoff sollte auch keine Einschränkungen bezüglich der visuellen Erscheinungsform der Oberfläche gegenüber einer Aluminiumoberfläche aus dem Stand der Technik bieten und ein geringes spezifisches Gewicht zur leichten Tragbarkeit der Möbelstücke aufweisen. Der Werkstoff sollte als Formteil und idealerweise in Form von Platten vorliegen, die dann zu den gewünschten Möbelstücken zusammengebaut werden können.

Es besteht deshalb die Aufgabe, Formteile mit Aluminium als strukturgebendem Bestandteil bereitzustellen, die zur Herstellung von Möbelstücken geeignet sind, und die gegenüber den Formteilen aus dem Stand der Technik eine erhöhte mechanische Stabilität aufweisen. Es besteht auch die Aufgabe, ein Verfahren zur Herstellung dieser Formteile bereitzustellen.

Die vorliegende Erfindung löst diese Aufgabe durch ein Formteil, welches zur Herstellung von Möbelstücken geeignet ist, und welches in einer geradlinigen Durchsicht aus einer Innenschicht, welche aus einem Polyurethanstück einer Dichte von 400 - 700 kg/m³, bestehend aus gehäckselten und verpressten Polyurethanmaterialschnipseln gemischt mit Aluminiumteilchen, besteht, und welches zwei Außenschichten aufweist, die aus Aluminiumplatten bestehen, wobei die Aluminiumplatten eine Dicke von 0,40 mm bis 1,00 mm aufweisen, und die Aluminiumplatten auf der Innenseite durch Klebeschichten aus einem 1K-PUR-Prepolymer auf einem Epoxid-Haftgrund befestigt sind.

Beansprucht wird ein Formteil zur Herstellung von Möbeln, umfassend
- eine Innenschicht, bestehend aus einem Polyurethanstück, und
- zwei Außenschichten, bestehend aus Aluminium, und
- zwischen den Außenschichten und der Innenschicht jeweils eine Klebeschicht,
und welches dadurch gekennzeichnet ist, dass
- das Polyurethanstück der Innenschicht aus gehäckselten und verpressten Polyurethanmaterialschnipseln gemischt mit Aluminiumteilchen und einem Bindemittel besteht und eine Dichte von 400 - 700 kg/m³ besitzt, und
- die zwei Außenschichten aus Aluminiumplatten bestehen, wobei die Aluminiumplatten eine Dicke von 0,40 - 1,00 mm aufweisen, und
- die Klebeschicht aus einem 1K-PUR-Prepolymer mit einem Epoxid-Haftgrund besteht.

Die Bezeichnungen der einzelnen Schichten beziehen sich dabei auf eine geradlinige Durchsicht durch das Formteil. Bei einer Plattenform des Formteils werden auf die Innenschicht zwei Außenschichten aufgebracht. Ist das Formteil ein Rohr oder eine Röhre, ist die Anzahl der beiden Außenschichten bei einer geradlinigen Durchsicht durch das Rohr oder die Röhre gegeben. Für ein Rohr oder eine Röhre bilden die beiden Außenschichten dann eine radiale Außenschicht. Der Epoxid-Haftgrund ist typischerweise auf der Aluminiumplatte auf der zur Klebeschicht hin gerichteten Seite aufgebracht.

Die Aluminiumplatte sollte für die Ausführung der Erfindung eine Schichtdicke von 0,40 mm bis 1,00 mm aufweisen. In einer Ausführungsform der Erfindung weist die Aluminiumplatte eine Schichtdicke von 0,50 mm bis 0,80 mm auf. Diese Schichtdicken haben sich als optimal sowohl für die Herstellung der Möbel als auch für die dabei erhaltene Stabilität der Möbel und deren spezifisches Gewicht erwiesen.

Das Häckseln und Verpressen von Polyurethanmaterialschnipseln ist im Stand der Technik bekannt und wird beschrieben beispielsweise in dem Dokument DE10228473A1. Als Bindemittel für die gehäckselten und verpressten Polyurethanmaterialschnipsel und die Aluminiumteilchen eignen sich Bindemittel, wie sie beispielsweise in dem Dokument US3717597A beschrieben sind. Eine Klebeschicht aus einem 1K-PUR-Prepolymer wird beschrieben beispielsweise in dem Dokument WO2017121540A1. Ein Epoxid-Haftgrund wird beschrieben beispielsweise in dem Dokument DE3042788A1.

In der gängigsten Ausführungsform der Erfindung ist das Formteil planar und weist die Form einer Platte auf. Eine Platte lässt sich gut zum Bau von Möbelstücken verwenden. Diese wird in einer einfachen Ausführungsform zum Aufbau einer Abstellfläche rechtwinklig mit einer anderen Platte verschraubt. Es ist jedoch im Rahmen der Erfindung auch möglich, ein Formteil herzustellen, welches keine Platte darstellt. In einer beispielhaften Ausführungsform können auch Rohre oder Röhren als Formteil der vorliegenden Erfindung hergestellt werden. Prinzipiell kann für das Formteil der vorliegenden Erfindung jede beliebige geometrisch mögliche Form gewählt werden.

In einer weiteren vorteilhaften Ausführungsform der vorliegenden Erfindung weist das Polyurethanstück der Innenschicht eine Dichte von 550 - 600 kg/m³ auf. Diese Dichte hat sich als optimal herausgstellt, um die damit gebauten Möbel einerseits weiterhin von geringem Gewicht halten zu lassen und andererseits eine genügende mechanische Stabilität zur Verschraubung zu erreichen.

In einer weiteren Ausführungsform der Erfindung ist die Aluminiumplatte mit einer Polyester-Lackierung mit einer Schichtdicke von 10 - 25 µm als äußerster Schicht lackiert, welche die äußerste Schicht des Formteils bildet und die Aluminiumplatten abdeckt. Diese Schichtdicke hat sich als optimal herausgestellt, um die Oberfläche der Aluminiumplatten zu schützen und eine Oberfläche zu schaffen, die einen angenehmen Griff beim Anfassen aufweist und visuell ansprechend ist. Diese Polyesterschicht wird in der Regel auf alle Aluminiumplatten des Formteils als äußerste Schicht aufgebracht. Es ist jedoch im Rahmen der Erfindung auch möglich, die Polyesterschicht nur auf einer Aluminiumplatte aufzubringen, bevorzugt dann auf der Aluminiumplatte, die später die Außenseite eines Möbelstücks bildet.

In einer weiteren Ausführungsform der Erfindung sind die Aluminiumteilchen in dem Polyurethanstück der Innenschicht, welche mit den gehäckselten und verpressten Polyurethanmaterialschnipseln gemischt werden, Aluminiumschnipsel eines Gewichts von 0,001 g bis 0,5 g. Durch diese Größe der Aluminiumschnipsel wird eine optimale mechanische Festigkeit des Polyurethanstücks erreicht.

Beansprucht wird auch ein Verfahren zur Herstellung des oder der oben beschriebenen Formteile. Beansprucht wird ein Verfahren, umfassend die Verfahrensschritte
- Häckseln eines Polyurethanschaums in einem Häcksler zu Polyurethanschnipseln, und
- Beigabe eines Bindemittels zu den Polyurethanschnipseln und Vermischen, so dass sich ein Gemisch bildet, und Verpressen des dabei erhaltenen Gemisches zu einem Polyurethanstück, und
- Aufbringen einer Klebeschicht auf mindestens eine Seite des Polyurethanstücks, und
- Aufpressen einer Aluminiumschicht auf die Seite des Polyurethanstücks, auf der die Klebeschicht aufgebracht ist,
und welches dadurch gekennzeichnet ist, dass
- zu den Polyurethanschnipseln vor dem Verpressen Aluminiumteilchen zugegeben werden, und
- das Verpressen zu einem Polyurethanstück mit einem solchen Druck und einer solchen Dauer vorgenommen wird, dass das Polyurethanstück nach dem Verpressen eine Dichte von 400 - 700 kg/m³ besitzt, und
- die Klebeschicht aus einem 1K-PUR-Prepolymer besteht und auf der zur Klebeschicht hin gerichteten Seite der Aluminiumplatte ein Epoxid-Haftgrund aufgebracht ist.

In der gängigsten Ausführungsform wird das Verfahren dazu genutzt, mehrere Formteile herzustellen, die dann zu einem Möbelstück zusammengesetzt werden. Es ist jedoch im Rahmen der Erfindung prinzipiell möglich, beliebig viele Formteile der Erfindung oder auch nur ein Formteil der Erfindung herzustellen. Auf die Außenseite der Aluminiumschicht, die nicht mit der Klebeschicht in Berührung kommt, kann im Rahmen der Erfindung noch eine Polyesterschicht der Dicke 10-25 µm aufgebracht werden.

In einer Ausführungsform der Erfindung wird das Verpressen zu einem Polyurethanstück mit einem solchen Druck und einer solchen Dauer vorgenommen, dass das Polyurethanstück nach dem Verpressen eine Dichte von 550 - 600 kg/m³ besitzt. Durch den Druck und die Dauer des Verpressens lässt sich die Dichte des Polyurethanstücks gut steuern.

In einer Ausführungsform der Herstellung des oben beschriebenen Formteils zur Herstellung von Möbelstücken wird die Herstellung des Möbelstücks durch Einfräsen eines Hohlraumes in das Formteil und Verschrauben von mindestens zwei Formteilen zu einem Möbelstück vorgenommen. Die oben beschriebenen Formteile sind hierzu ideal geeignet. Der eingefräste Hohlraum kann ein Befestigungsmuster enthalten. Das Befestigungsmuster kann hierzu in den eingefrästen Hohlraum eingefräst werden. Der eingefräste Hohlraum ist in einer einfachen Ausführungsform ein eingefräster Zylinder und das Befestigungsmuster ein Schraubgewinde. Die Befestigung erfolgt dann durch ein Befestigungsteil. Das Befestigungsteil ist in einer einfachen Ausführungsform eine Schraube. Der eingefräste Hohlraum und das Befestigungsmuster weisen eine erhöhte Stabilität auf und bieten dem Befestigungsmuster bei Belastung durch Befestigungsteile eine erhöhte Stabilität, so dass diese nicht ausreißen und eine stabile Verbindung der Formteile zu einem Möbelstück ermöglichen.

Beansprucht wird auch die Verwendung eines oben beschriebenen Formteils zur Herstellung von Möbelstücken. Obwohl die Herstellung von Möbelstücken eine bevorzugte Verwendung der oben beschriebenen Formteile darstellt, ist es prinzipell möglich, die Formteile zu jedem Zweck zu verwenden, für den diese sich eignen.

Bei der Herstellung von Möbelstücken können auch Formteile verwendet werden, die als Platten geartet sind und planar sind. Dabei können sich offene Seitenflächen auftun, die nicht mit der Außenschicht aus Aluminium bedeckt sind. Diese offenen Seitenflächen können nachträglich mit einer Abdeckungsplatte aus Aluminium versehen werden. Die offenen Seitenflächen können auch zur Abdeckung mit einer Abdeckungsplatte aus einem geeigneten handelsüblichen Kunststoff versehen werden. Als Kunststoffe eignen sich hierfür beispielsweise UV-stabilisiertes Polypropen (PP), UV-stabilisiertes Polyethen (PE), Polyvinylchlorid (PVC) oder Acrylnitril-Butadien-Styrol-Copolymer (ABS). Die Abdeckungsplatte aus Aluminium besitzt in einer beispielhaften Ausführungsform eine Dicke von 0,40 mm bis 1,00 mm. Die Abdeckungsplatte aus Kunststoff besitzt in einer beispielhaften Ausführungsform eine Dicke von 1,0 mm bis 2,0 mm. Die Abdeckungsplatte aus Aluminium kann wie die Außenschicht des Formteils mit einer Klebeschicht aus einem 1K-PUR-Prepolymer und einem Epoxid-Haftgrund auf dem Polyurethanstück verklebt werden. Die Abdeckungsplatte aus Kunststoff kann mit einer Klebeschicht aus einem 1K-PUR-Prepolymer auf dem Polyurethanstück verklebt werden. Dadurch ergibt sich an der offenen Seitenfläche durch die Abdeckungsplatte eine Stoßkante.

Beansprucht wird schließlich auch ein Möbelstück, welches aus einem oder mehreren der oben beschriebenen Formteile hergestellt wird.

Die Erfindung besitzt den Vorteil, mechanisch stabile Formteile zum Bau von Möbelstücken zur Verfügung zu stellen. Diese Möbelstücke zeichnen sich außerdem bedingt durch diese Formteile durch ein geringes spezifisches Gewicht und dadurch eine gute Tragbarkeit und durch eine gute Oberflächenbeständigkeit und ein visuell ansprechendes Erscheinungsbild aus. Die Formteile weisen eine erhöhte Stabilität gegenüber den Fomteilen aus dem Stand der Technik auf, so dass diese das sichere Einbohren von Schraubgewinden erlauben.

Die Erfindung wird im Folgenden durch einundzwanzig Zeichnungen genauer beschrieben, wobei diese Zeichnungen nur Ausführungsformen der Erfindung darstellen und die Erfindung nicht auf diese Ausführungsformen beschränkt ist.

Die Zeichnung FIG.1 zeigt das Formteil mit den einzelnen Schichten in nicht zusammengesetzter Form in schräg frontaler Ansicht. Die Zeichnung FIG.2 zeigt das Formteil mit den einzelnen Schichten in seitlicher Ansicht. Die Zeichnung FIG.3 zeigt ein Formteil mit einer Schraube in einem eingefrästen Hohlraum in seitlicher Ansicht. Die Zeichnung FIG.4 zeigt ein Formteil mit einer Befestigungsmutter über dem eingefrästen Hohlraum in frontaler Ansicht. Die Zeichnung FIG. 5 zeigt ein lose zusammengesetztes Formteil mit eingefrästen Hohlräumen in schräg seitlicher Ansicht. Die Zeichnung FIG.6 zeigt eine Schraube zum Einsetzen in einen eingefrästen Hohlraum. Die Zeichnung FIG.7 zeigt ein fest zusammengesetztes Formteil mit der Schraube in den eingefrästen Hohlräumen in schräg seitlicher Ansicht. Die Zeichnung FIG.8 zeigt zwei mit Schrauben zusammengesetzte Formteile in seitlicher Ansicht. Die Zeichnung FIG.9 zeigt ein Formteil mit einem aufgesetzten und befestigten Gegenstand in seitlicher Ansicht. Die Zeichnung FIG.10 zeigt ein Formteil, auf das mit einer speziellen Schraube ein Gegenstand aufgeschraubt ist, in seitlicher Ansicht. Die Zeichnung FIG.11 zeigt ein Formteil, auf das mit einer speziellen Schraube mit einem speziellen Drehkopf ein Gegenstand aufgeschraubt ist, in seitlicher Ansicht. Die Zeichnung FIG.12 zeigt ein Formteil mit eingefrästen Hohlräumen und einer Dübel-Spreiz-Verbindung in seitlicher Ansicht. Die Zeichnung FIG.13 zeigt zwei mit einem Dübel zusammengesetzte Formteile in seitlicher Ansicht. Die Zeichnung FIG.14 zeigt zwei mit einem Doppel-Einschlagdübel zusammengesetzte Formteile in seitlicher Ansicht. Die Zeichnung FIG.15 zeigt zwei mit einer Spreizschraube zusammengesetzte Formteile in seitlicher Ansicht. Die Zeichnung FIG.16 zeigt zwei mit einer unsichtbaren Steckverbindung an den Schmalseiten zusammengesetzte Formteile in seitlicher Ansicht. Die Zeichnung FIG.17 zeigt zwei mit einer unsichtbaren Steckverbindung an den Breitseiten zusammengesetzte Formteile in seitlicher Ansicht. Die Zeichnung FIG.18 zeigt zwei mit einer Lamellofeder zusammengesetzte Formteile in seitlicher Ansicht. Die Zeichnung FIG.19 zeigt zwei mit einer Winkelfeder zusammengesetzte Formteile in seitlicher Ansicht. Die Zeichnung FIG.20 zeigt die Verwendung des Formteils zur Herstellung eines Möbelstücks von oben. Die Zeichnung FIG.21 zeigt die Verwendung des Formteils zur Herstellung eines Möbelstücks in schräg frontaler Ansicht.

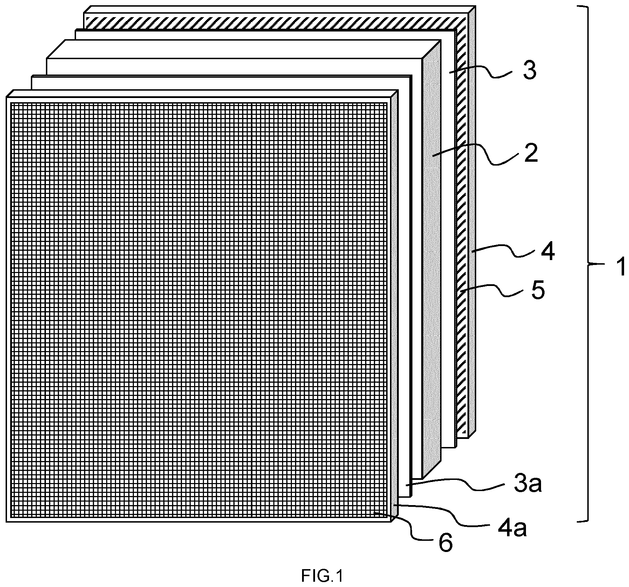

Die Zeichnung FIG.1 zeigt das Formteil (**1**) mit den einzelnen Schichten in nicht zusammengesetzter Form in schräg frontaler Ansicht. Zu sehen sind die einzelnen Schichten, welche zusammengesetzt werden und dadurch das Formteil (**1**) bilden. Innerste Schicht ist die Innenschicht, welche durch das Polyurethanstück (**2**) gebildet wird. Das Polyurethanstück (**2**) wird durch Häckseln eines Polyurethanschaums in einem Häcksler zu Polyurethanschnipseln, Beigabe eines Bindemittels zu den Polyurethanschnipseln, Vermischen zu einem Gemisch und Verpressen des dabei erhaltenen Gemisches zu einem Polyurethanstück (**2**) erhalten. Die nächste Schicht ausgehend von dem Polyurethanstück (**2**) in geradliniger Durchsicht ist die Klebeschicht, welche durch das 1K-PUR-Prepolymer (**3**) gebildet wird. Die nächste Schicht ist die Außenschicht, welche durch die Aluminiumplatte (**4**) gebildet wird. Die Aluminiumplatte (**4**) ist auf der Innenseite zur Innenschicht hin mit einem Epoxid-Haftgrund (**5**) beschichtet. Der Epoxid-Haftgrund (**5**) ermöglicht eine bessere Haftung der Klebeschicht (**3**) auf der Aluminiumplatte (**4**). Zu sehen sind hier auch das zweite 1K-PUR-Prepolymer (**3a**) als weitere Klebeschicht, und die zweite Aluminiumschicht (**4a**) als weitere Außenschicht, welche in geradliniger Durchsicht auf der anderen Seite der Innenschicht aufgebracht sind. Die letzte Schicht ist in dieser Ausführungsform dann die äußerste Schicht, welche durch eine Polyester-Lackierung (**6**) auf der zweiten Aluminiumplatte (**4a**) gebildet wird. Auch die erste Aluminiumschicht (**4**) kann auf der hier nicht sichtbaren Oberfläche eine Polyester-Lackierung (**6**) aufweisen. Dadurch werden die Oberfläche der Aluminiumplatte (**4a**) geschützt und ein angenehmer Griff erzeugt.

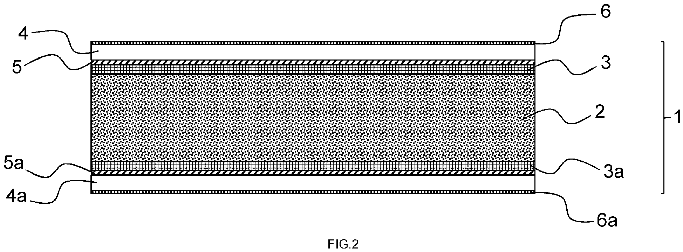

Die Zeichnung FIG.2 zeigt das Formteil (**1**) mit den einzelnen Schichten in seitlicher Ansicht. Die einzelnen Schichten sind hier zu dem fertigen Formteil (**1**) zusammengesetzt. Zu sehen sind die Innenschicht, die durch das Polyurethanstück (**2**) gebildet wird, die Klebeschicht, die durch das 1K-PUR-Prepolymer (**3**) gebildet wird, der Epoxid-Haftgrund (**5**) zwischen der äußeren Schicht und der Klebeschicht, die Außenschicht, welche durch die Aluminiumplatte (**4**) gebildet wird, und die Polyester-Beschichtung (**6**), welche die äußerste Schicht bildet. Zu sehen sind hier auch das 1K-PUR-Prepolymer (**3a**) auf der anderen Seite des Polyurethanstücks (**2**), welches die Klebeschicht auf der anderen Seite des Polyurethanstücks (**2**) bildet, der Epoxid-Haftgrund (**5a**) in geradliniger Durchsicht auf der anderen Seite des Polyurethanstücks (**2**), und die Polyester-Lackierung (**6a**) in geradliniger Durchsicht auf der anderen Seite des Polyurethanstücks (**2**).

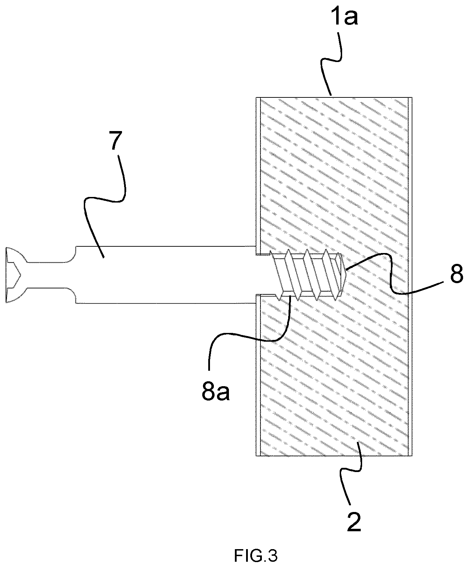

Die Zeichnung FIG.3 zeigt ein erstes Formteil (**1a**) mit einer Schraube (**7**) in einem eingefrästen Hohlraum (**8**) in seitlicher Ansicht. In das Formteil (**1**), welches aus den beschriebenen Schichten gebildet wird, wird ein ein Hohlraum (**8**) eingefräst. In den Hohlraum (**8**) wird eine Schraube (**7**) eingedreht. Dadurch enthält der eingefräste Hohlraum (**8**) ein Befestigungsmuster (**8a**) in Form eines Schraubgewindes. Das Polyurethanstück (**2**) weist eine genügende Festigkeit auf, um das Eindrehen einer Schraube (**7**) und das Eindrehen eines Befestigungsmusters (**8a**) durch die Schraube (**7**) zu ermöglichen. Das Schraubgewinde in dem Formteil (**1a**) kann auch durch einen Bohrer eingedreht werden. Das Polyurethanstück (**2**) der Erfindung ermöglicht für diese Befestigungsart eine ausreichende Stabiltät.

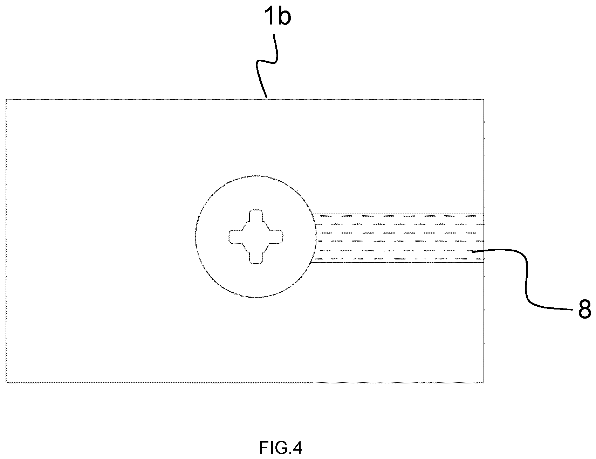

Die Zeichnung FIG.4 zeigt ein zweites Formteil (**1b**) mit einer Befestigungsmutter (**9**) über dem eingefrästen Hohlraum (**8**) in frontaler Ansicht. In das Formteil (**1**) ist ein Hohlraum (**8**) eingefräst. In diesen Hohlraum (**8**) ist eine Befestigungsmutter (**9**) eingebracht, indem der eingefräste Hohlraum (**8**) sich auch in Richtung der Befestigungsmutter (**9**) öffnet. Dieses Formteil (**1b**) stellt das Gegenstück zur Befestigung des Formteils (**1**) aus der Zeichnung FIG.3 dar. Die Schraube (**7**) aus dem Formteil (**1**) des Gegenstücks wird in den eingefrästen Hohlraum (**8**) eingefügt. Die Befestigungsmutter (**9**) wird dann gedreht, so dass die Schraube (**7**) in dem eingefrästen Hohlraum (**8**) befestigt wird. Die beiden Formteile (**1a**, **1b**) können dadurch gegeneinander befestigt werden. Das Polyurethanstück (**2**) der Erfindung, in dieser Abbildung nicht zu sehen, ermöglicht für diese Befestigungsart eine ausreichende Stabiltät.

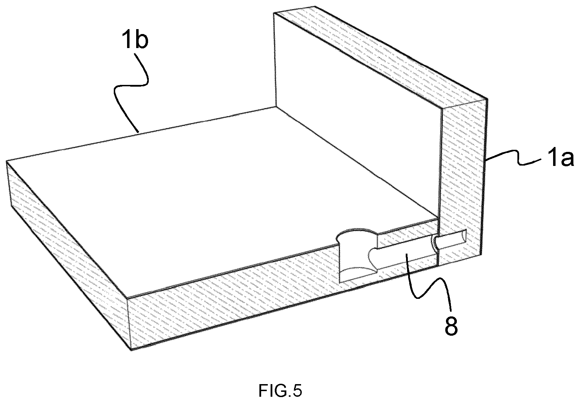

Die Zeichnung FIG.5 zeigt zwei lose zusammengesetzte Formteile (**1a**, **1b**) mit eingefrästen Hohlräumen (**8**) in schräg seitlicher Ansicht. Die Hohlräume (**8**) sind für eine vorgesehene Schraube (**7**) und eine vorgesehene Befestigungsmutter (**9**) eingearbeitet. In dieser Zeichnung ist gut zu sehen, dass sich der eingefräste Hohlraum (**8**) zur vorgesehenen Befestigungsmutter (**9**) hin öffnet.

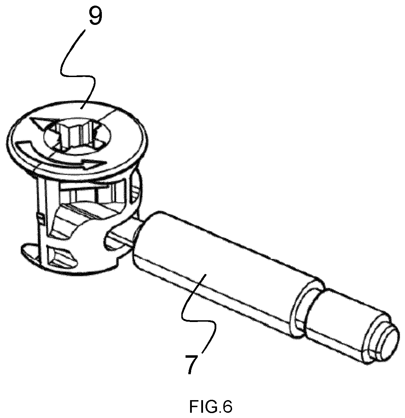

Die Zeichnung FIG.6 zeigt eine Schraube (**7**) aus dem Stand der Technik zum Einsetzen in einen eingefrästen Hohlraum (**8**). In dieser Ausführungsform besitzt die Schraube (**7**) kein Schraubgewinde, sondern wird durch die Befestigungsmutter (**9**) befestigt.

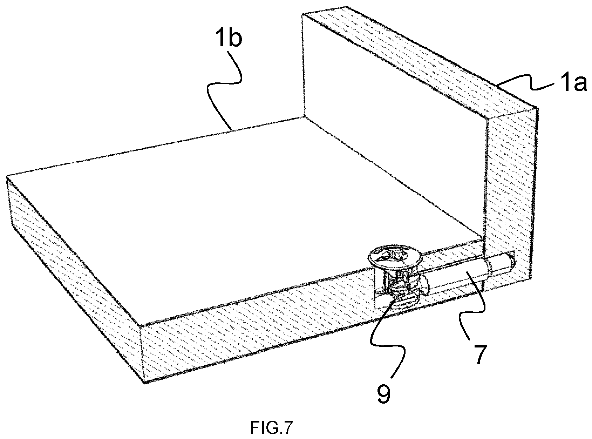

Die Zeichnung FIG.7 zeigt zwei fest zusammengesetzte Formteile (**1a**,**1b**) mit der Schraube (**7**) in den eingefrästen Hohlräumen (**8**) in schräg seitlicher Ansicht. Die Stabilität des Polyurethanstücks (**2**) ermöglicht das stabile Eindrehen der Schraube (**7**) und der Befestigungsmutter (**9**).

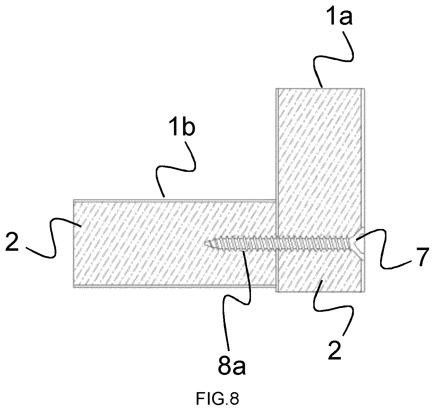

Die Zeichnung FIG.8 zeigt zwei mit Schrauben (**7**) zusammengesetzte Formteile (**1**) in seitlicher Ansicht. Zu sehen sind zwei Formteile (**1a**,**1b**), die durch eine Schraube (**7**) zusammengefügt sind. In dieser Ausführungsform besitzen die Schrauben (**7**) ein Schraubgewinde. Die Formteile (**1a**,**1b**) mit dem Polyurethanstück (**2**) bieten eine genügende Stabilität und Festigkeit, um durch die Schraube (**7**) das erste Formteil (**1a**) und das zweite Formteil (**1b**) gegeneinander zu befestigen. Es ist möglich, die Schraube (**7**) zur Befestigung in die Formteile (**1a**,**1b**) ohne weitere Vorbehandlung einzudrehen. Dadurch wird beim Eindrehen ein Schraubgewinde als Befestigungsmuster (**8a**) erzeugt. Bevorzugt wird jedoch der Hohlraum (**8**) eingefräst und bei der Einfräsung ein Befestigungsmuster (**8a**) eingefräst.

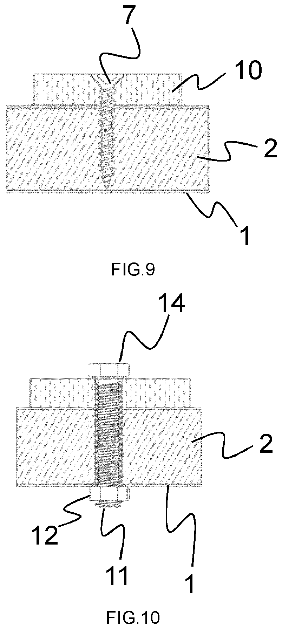

Die Zeichnung FIG.9 zeigt ein Formteil (**1**) mit einem aufgesetzten und befestigten Gegenstand in seitlicher Ansicht. Zu sehen ist ein Formteil (**1**) mit einem aufgeschraubten Gegenstand (**10**). Das Polyurethanstück (**2**) verleiht dem Formteil (**1**) eine genügende Stabilität, um eine Schraube (**7**) einzudrehen und den Gegenstand (**10**) durch die Schraube (**7**) auf dem Formteil (**1**) zu befestigen.

Die Zeichnung FIG.10 zeigt ein Formteil (**1**), auf das mit einer speziellen Schraube (**11**) aus dem Stand der Technik ein Gegenstand (**10**) aufgeschraubt ist, in seitlicher Ansicht. Zu sehen ist ein Formteil (**1**), auf das mit einer speziellen Schraube (**11**) mit einer Schraubmutter (**12**) ein Gegenstand (**10**) aufgeschraubt ist. Die spezielle Schraube (**11**) besitzt einen Drehkopf (**14**) und ein Schraubgewinde (**13**), welches mit einer Schraubmutter (**12**) in dem eingefrästen Hohlraum (**8**) befestigt wird. Die Stabilität des Polyurethanstücks (**2**) ermöglicht das stabile Eindrehen der speziellen Schraube (**11**).

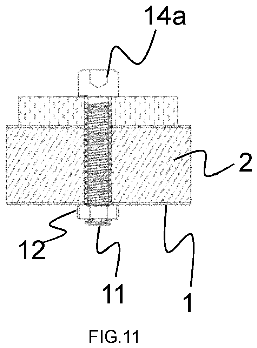

Die Zeichnung FIG.11 zeigt ein Formteil (**1**), auf das mit einer speziellen Schraube mit einem speziellen Drehkopf ein Gegenstand aufgeschraubt ist, in seitlicher Ansicht. Zu sehen ist ein Formteil (**1**), auf das mit einer speziellen Schraube (**11**) mit einem speziellen Drehkopf (**14a**) ein Gegenstand (**10**) aufgeschraubt ist, in seitlicher Ansicht. Die spezielle Schraube (**11**) besitzt einen speziellen Drehkopf (**14a**), der mit einem Inbusschlüssel drehbar ist. Auch diese spezielle Schraube mit dem speziellen Drehkopf (**14a**) besitzt ein Schraubgewinde (**13**), welches mit einer Schraubmutter (**12**) in dem eingefrästen Hohlraum (**8**) befestigt wird. Die Stabilität des Polyurethanstücks (**2**) ermöglicht das stabile Eindrehen der speziellen Schraube (**11**).

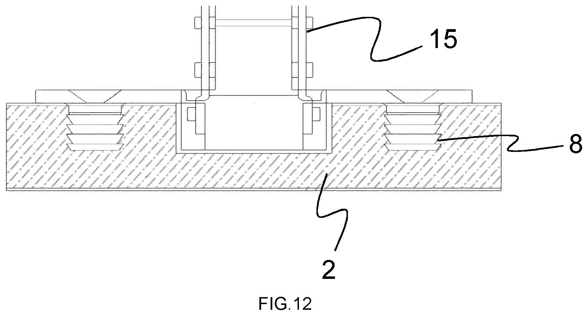

Die Zeichnung FIG.12 zeigt ein Formteil (**1**) mit eingefrästen Hohlräumen (**8**) und einer Dübel-Spreiz-Verbindung (**15**) in seitlicher Ansicht. Die Dübel-Spreizverbindung (**15**) ist in die eingefrästen Hohlräume (**8**) eingelassen und wird zur Befestigung gespreizt. Diese Befestigungsart ist möglich, weil das Polyurethanstück (**2**) eine erhöhte Stabilität besitzt.

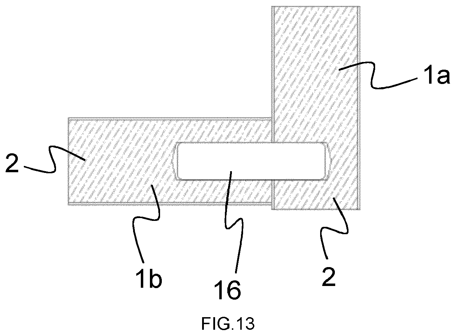

Die Zeichnung FIG.13 zeigt zwei mit einem Dübel (**16**) zusammengesetzte Formteile **(1a,1b)** in seitlicher Ansicht. Der Dübel (**16**) wird in ein Formteil (**1a**, **1b**) eingeschlagen und die Formteile (**1a**, **1b**) werden durch Pressdruck gegeneinander befestigt. Auch diese Befestigungsart ist nur möglich, weil die Polyurethanstücke (**2**) eine erhöhte Stabilität besitzen.

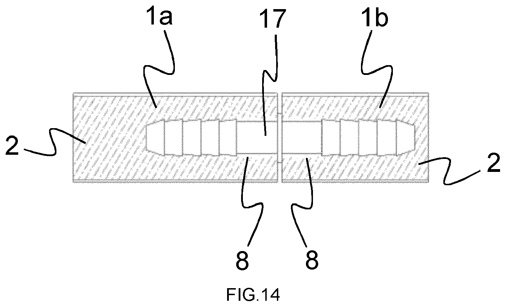

Die Zeichnung FIG.14 zeigt zwei mit einem Doppel-Einschlagdübel (**17**) zusammengesetzte Formteile **(1a,1b)** in seitlicher Ansicht. Zwei Formteile (**1a**,**1b**) sind hier mit einem sogenannten Doppeleinschlagdübel (**17**) gegeneinander befestigt. Dieser Doppeleinschlagdübel (**17**) wird zunächst in einem Formteil (**1a**) durch Einschlagen in den eingefrästen Hohlraum (**8**) befestigt und dann mit dem Formteil (**1a**) in den eingefrästen Hohlraum (**8**) des anderen Formteils (**1b**) eingepresst. Dadurch werden die beiden Formteile **(1a,1b)** gegeneinander befestigt. Diese Befestigungsart ist nur möglich, weil das Polyurethanstück (**2**) eine erhöhte Stabilität besitzt.

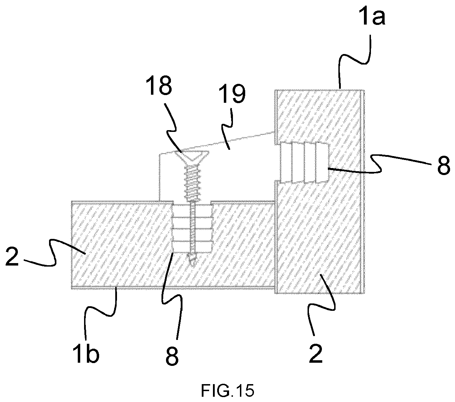

Die Zeichnung FIG.15 zeigt zwei mit einer Spreizschraube (**18**) zusammengesetzte Formteile (**1a**,**1b**) in seitlicher Ansicht. Eine Spreizschraube (**18**) drückt einen Eckbeschlag (**19**) gegen die eingefrästen Hohlräume zweier Formteile (**1a**,**1b**). Diese werden dadurch fest zusammengedrückt.

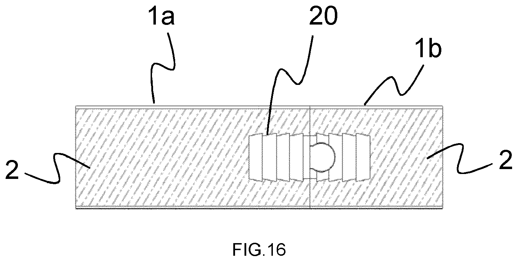

Die Zeichnung FIG.16 zeigt zwei mit einer unsichtbaren Steckverbindung (**20**) an den Schmalseiten zusammengesetzte Formteile **(1a,1b)** in seitlicher Ansicht. Die unsichtbare Steckverbindung (**20**) wird in die eingefrästen Hohlräume (**8**) eines Formteils (**1a**) gedrückt und dann in den eingefrästen Hohlraum (**8**) des anderen Formteils (**1b**) gedrückt. Diese Verbindung ist etwas weninger stabil als eine Verbindung mit einem Doppel-Einschlagdübel (**17**), ist jedoch zur losen Befestigung geeignet.

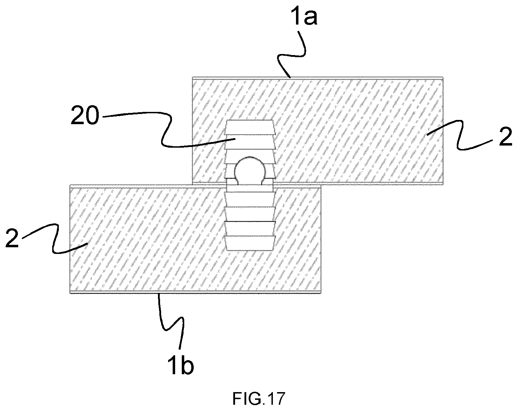

Die Zeichnung FIG.17 zeigt zwei mit einer unsichtbaren Steckverbindung (**20**) an den Breitseiten zusammengesetzte Formteile (**1a**,**1b**) in seitlicher Ansicht. Diese Befestigung wird genauso durchgeführt wie in der Befestigung in der Zeichnung FIG.16, wobei hier die Formteile (**1a**,**1b**) seitlich gegeneinander befestigt sind.

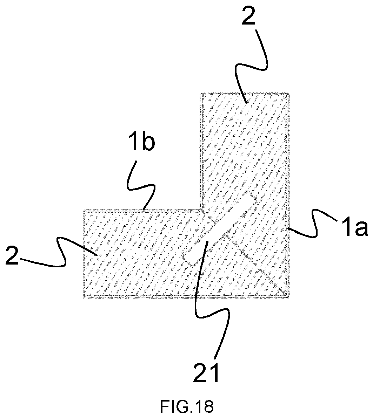

Die Zeichnung FIG.18 zeigt zwei mit einer Lamellofeder (**21**) zusammengesetzte Formteile (**1a**,**1b**) in seitlicher Ansicht. Zu sehen sind zwei gewinkelte Formteile (**1a**,**1b**), die durch eine Lamellofeder (**21**) gegeneinander befestigt sind. Lamellofedern (**21**) eignen sich zum Zusammensetzen von gewinkelten Formteilen (**1a**,**1b**). Die Lamellofeder (**21**) wird in einen eingefrästen Hohlraum (**8**) des ersten Formteils (**1a**) gesetzt und dann mit dem ersten Formteil (**1a**) in den eingefrästen Hohlraum (**8**) des anderen Formteils (**1b**) gedrückt. Durch die erhöhte Stabilität des Polyurethanstücke (**2**) der beiden Formteile (**1a**,**1b**) ist diese Befestigungsart möglich.

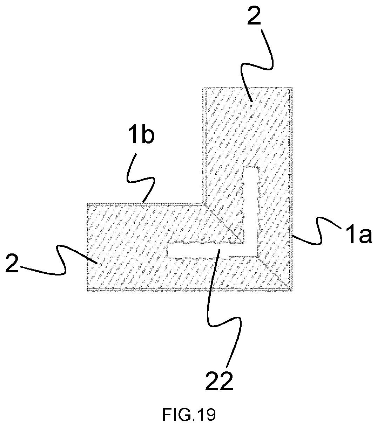

Die Zeichnung FIG.19 zeigt zwei mit einer Winkelfeder (**22**) zusammengesetzte Formteile (**1a**,**1b**) in seitlicher Ansicht. Die beiden Formteile (**1a**, **1b**) werden in gleicher Weise wie mit einer Lamellofeder (**21**) gegeneinander befestigt, wobei die Lamellofeder (**21**) gegen eine Winkelfeder (**22**) ersetzt ist.

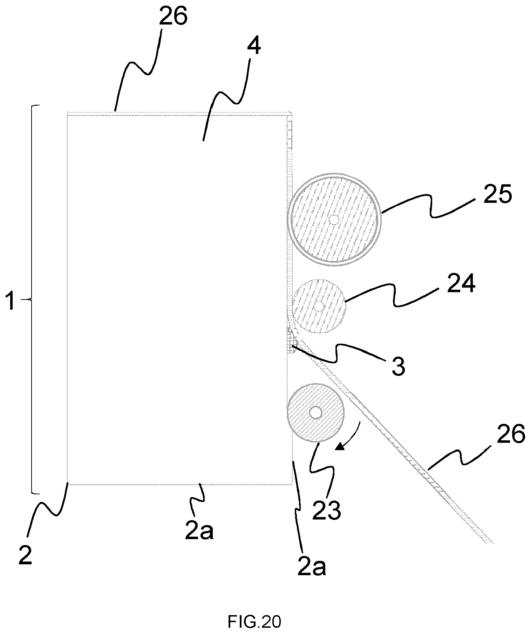

Die Zeichnung FIG.20 zeigt die Verwendung des Formteils (**1**) zur Herstellung eines Möbelstücks von oben. Zu sehen ist die Aluminiumschicht (**4**) des Formteils von oben. Das Polyurethanstück (hier nicht zu sehen) wird an den offenen Seitenflächen (**2a**) des Polyurethanstücks (**2**) zunächst mit einer Vorfräse (**23**) glattgeschliffen. Die Vorfräse (**23**) ist mit einer Schleiffläche ausgestattet und dreht sich in Pfeilrichtung. Dabei kommt sie an der Schleiffläche mit der offenen Seitenfläche (**2a**) des Polyurethanstücks (**2**) in Berührung, wobei die offene Seitenfläche (**2a**) glattgeschliffen wird. Nach dem Durchlaufen der Vorfräse (**23**) wird, beispielsweise durch einen Kalander, eine Klebeschicht aus einem 1K-PUR-Prepolymer (**3**) auf die offene Seitenfläche (**2a**) des Polyurethanstücks (**2**) aufgetragen. Die Klebeschicht wird vor dem Verkleben durch Erhitzen, beispielwiese mit einem Laser, mit Heißluft oder durch nahe Infrarotstrahlung (NIR), auf die zur Verklebung erforderliche Temperatur erhitzt. Auf die Klebeschicht wird dann eine Abdeckungsplatte (**26**) zur Abdeckung aus Kunststoff aus UV-stabilisiertem Polypropen (PP), UV-stabilisiertem Polyethen (PE), Polyvinylchlorid (PVC) oder Acrylnitril-Butadien-Styrol-Copolymer (ABS) aufgetragen. Die Abdeckungsplatte (**26**) aus Kunststoff besitzt in einer beispielhaften Ausführungsform eine Dicke von 1,0 mm bis 2,0 mm. Das Auftragen der Abdeckungsplatte (**26**) erfolgt durch eine Walze (**24**). Nach dem Auftragen der Abdeckungsplatte (**26**) wird die entstandene Stoßkante der Abdeckungsplatte (**26**) mit einer Formfräse (**25**) glattpoliert.

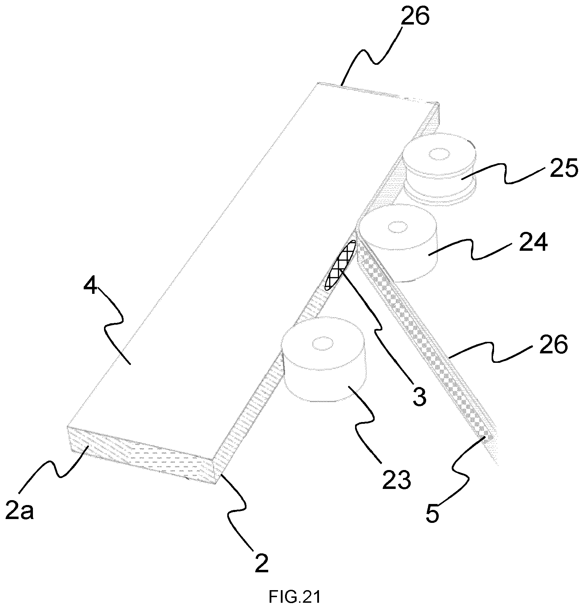

Die Zeichnung FIG.21 zeigt die Verwendung des Formteils (**1**) zur Herstellung eines Möbelstücks in schräg frontaler Ansicht. Zu sehen sind das Polyurethanstück (**2**) und die Aluminiumplatte (**4**). Nach dem über die offene Seitenfläche (**2a**) des Polyurethanstücks (**2**) eine Vorfräse (**23**) gelaufen ist, wird eine Klebeschicht aus einem 1K-PUR-Prepolymer (**3**) aufgetragen. Danach wird eine Abdeckungsplatte (**26**) aus Aluminium aufgetragen. Die Abdeckungsplatte (**26**) aus Aluminium besitzt in einer beispielhaften Ausführungsform eine Dicke von 0,40 mm bis 1,00 mm. Die Abdeckungsplatte (**26**) aus Aluminium ist auf der Innenseite mit einem Epoxid-Haftgrund (**5**) beschichtet. Die Abdeckungsplatte (**26**) mit dem Epoxid-Haftgrund (**5**) wird mit einer Walze (**24**) auf die Klebeschicht aufgetragen. Dadurch entsteht eine Stoßkante. Hinter der Walze (**24**) läuft noch eine Formfräse (**25**) über die Abdeckungsplatte (**26**), damit diese eine glatte Oberfläche erhält. Nach dieser Prozedur kann das Formteil (**1**) zur weiteren Herstellung eines Möbelstücks verwendet werden.

### Bezugszeichenliste

- 1: Formteil
- 1a: Erstes Formteil
- 1b: Zweites Formteil
- 2: Polyurethanstück
- 2a: Offene Seitenfläche
- 3: 1K-PUR-Prepolymer
- 3a: 1K-PUR-Prepolymer auf der anderen Seite des Polyurethanstücks
- 4: Aluminiumschicht
- 4a: Zweite Aluminiumschicht
- 5: Epoxid-Haftgrund
- 5a: Epoxid-Haftgrund auf der anderen Seite des Polyurethanstücks
- 6: Polyester-Lackierung
- 6a: Polyester-Lackierung auf der anderen Seite des Polyurethanstücks
- 7: Schraube
- 8: Eingefräster Hohlraum
- 8a: Befestigungsmuster
- 9: Befestigungsmutter
- 10: Gegenstand
- 11: Spezielle Schraube
- 12: Schraubmutter
- 13: Schraubgewinde
- 14: Drehkopf
- 14a: Spezieller Drehkopf
- 15: Dübel-Spreiz-Verbindung
- 16: Dübel
- 17: Doppel-Einschlagdübel
- 18: Spreizschraube
- 19: Eckbeschlag
- 20: Unsichtbare Steckverbindung
- 21: Lamellofeder
- 22: Winkelfeder
- 23: Vorfräse
- 24: Walze
- 25: Formfräse
- 26: Abdeckungsplatte

## Patentansprüche

1. Formteil zur Herstellung von Möbeln, umfassend
• eine Innenschicht, bestehend aus einem Polyurethanstück, und
• zwei Außenschichten, bestehend aus Aluminium, und
• zwischen den Außenschichten und der Innenschicht jeweils eine Klebeschicht,
**dadurch gekennzeichnet, dass**
• das Polyurethanstück der Innenschicht aus gehäckselten und verpressten Polyurethanmaterialschnipseln gemischt mit Aluminiumteilchen und einem Bindemittel besteht und eine Dichte von 400 - 700 kg/m³ besitzt, und
• die zwei Außenschichten aus Aluminiumplatten bestehen, wobei die Aluminiumplatten eine Dicke von 0,40 - 1,00 mm aufweisen, und
• die Klebeschicht aus einem 1K-PUR-Prepolymer mit einem Epoxid-Haftgrund besteht.

2. Formteil gemäß Anspruch 1, **dadurch gekennzeichnet, dass** dieses planar ist und die Form einer Platte aufweist.

3. Formteil gemäß einem der Ansprüche 1 oder 2, **dadurch gekennzeichnet, dass** das Polyurethanstück der Innenschicht eine Dichte von 550 - 600 kg/m³ aufweist.

4. Formteil gemäß einem der Ansprüche 1 bis 3, **dadurch gekennzeichnet, dass** die Aluminiumplatte mit einer Polyester-Lackierung mit einer Schichtdicke von 10 - 25 µm als äußerster Schicht lackiert ist.

5. Formteil gemäß einem der Ansprüche 1 bis 3, **dadurch gekennzeichnet, dass** die Aluminiumteilchen Aluminiumschnipsel eines Gewichts von 0,001 bis 0,5 g sind.

6. Verfahren zur Herstellung eines Formteils gemäß einem der Ansprüche 1 bis 5, umfassend die Verfahrensschritte
• Häckseln eines Polyurethanschaums in einem Häcksler zu Polyurethanschnipseln, und
• Beigabe eines Bindemittels zu den Polyurethanschnipseln und Vermischen, so dass sich ein Gemisch bildet, und Verpressen des dabei erhaltenen Gemisches zu einem Polyurethanstück, und
• Aufbringen einer Klebeschicht auf mindestens eine Seite des Polyurethanstücks, und
• Aufpressen einer Aluminiumschicht auf die Seite des Polyurethanstücks, auf der die Klebeschicht aufgebracht ist,
**dadurch gekennzeichnet, dass**
• zu den Polyurethanschnipseln vor dem Verpressen Aluminiumteilchen zugegeben werden, und
• das Verpressen zu einem Polyurethanstück mit einem solchen Druck und einer solchen Dauer vorgenommen wird, dass das Polyurethanstück nach dem Verpressen eine Dichte von 400 - 700 kg/m³ besitzt, und
• die Klebeschicht aus einem 1K-PUR-Prepolymer besteht und auf der zur Klebeschicht hin gerichteten Seite der Aluminiumplatte ein Epoxid-Haftgrund aufgebracht ist.

7. Verfahren zur Herstellung eines Formteils gemäß Anspruch 6, **dadurch gekennzeichnet, dass** das Verpressen zu einem Polyurethanstück mit einem solchen Druck und einer solchen Dauer vorgenommen wird, dass das Polyurethanstück nach dem Verpressen eine Dichte von 550 - 600 kg/m³ besitzt.

8. Verwendung eines Formteils gemäß einem der Ansprüche 1 bis 5 zur Herstellung von Möbelstücken.

9. Verwendung eines Formteils gemäß Anspruch 8, **dadurch gekennzeichnet, dass** die Herstellung des Möbelstücks durch Einbohren eines Schraubgewindes in das Formteil und Verschrauben von mindestens zwei Formteilen zu einem Möbelstück vorgenommen wird.

10. Möbelstück, hergestellt aus einem Formteil gemäß einem der Ansprüche 1 bis 5.

## Claims

1. Moulded part for the production of furniture, comprising
• an internal layer made of a piece of polyurethane and
• two external layers consisting of aluminium and
• between the outer layers and inner layer, one layer of adhesive on each side,
**characterised in such a way that**
• the polyurethane piece of the internal layer is made of chopped and pressed polyurethane material shreds mixed with aluminium particles and a binder, having a density of 400 - 700 kg/m³, and
• the two outer layers are made of aluminium sheet, with the sheets having a thickness of 0.40mm to 1.00 mm, and
• the adhesive layer consists of a 1K PUR prepolymer with an epoxy adhesive primer.

2. Moulded part as per claim 1, **characterised in such a way that** it is flat and made in the shape of a panel.

3. Moulded part as per those in claims 1 or 2, **characterised in such a way that** the polyurethane piece of the inner layer has a density of 550 - 600 kg/m³.

4. Moulded part as per those in claims 1 to 3, **characterised in such a way** that the aluminium sheet has a polyester coating with a layer thickness of 10-25 µm, forming the outer layer.

5. Moulded part as per those in claims 1 to 3, **characterised in such a way that** the aluminium particles are aluminium shavings weighing from 0.001 to 0.5 g.

6. Process to manufacture a moulded part as per those in claims 1 to 5, including the process stages
• chopping polyurethane foam in a shredder into polyurethane shreds, and
• adding a binder to the polyurethane shreds and mixing them to form a mixture to then be pressed into a polyurethane piece, and
• applying a layer of adhesive to at least one side of the polyurethane piece, and
• pressing an aluminium layer onto the side of the polyurethane piece on which the glue layer is applied,
**characterised in such a way that**
• aluminium particles are added to the polyurethane shreds before pressing, and
• compression into a polyurethane piece is carried out to such pressure and duration that the polyurethane piece has a density after compression of 400 - 700 kg/m³, and
• the adhesive layer consists of a 1K PUR prepolymer and an epoxy adhesive primer is applied to the side of the aluminium sheet facing the adhesive layer.

7. Process to manufacture a moulded part as per claim 6, **characterised in such a way that** compression into a polyurethane piece is carried out to such pressure and duration that the polyurethane piece has a density of 550-600 kg/m³ after compression.

8. Use of a moulded part as per those in claims 1 to 5 for the production of furniture.

9. Use of a moulded part as per claim 8, **characterised in such a way that** the manufacture of the piece of furniture can be carried out by boring a screw thread into the moulded part and attaching at least two moulded parts together into a piece of furniture.

10. Piece of furniture manufactured from a moulded part as per those in claims 1 to 5.

## Revendications

1. Pièce moulée pour la fabrication de meubles, comprenant
• une couche intérieure constituée d'une pièce de polyuréthane, et de
• deux couches extérieures constituées d'aluminium, et
• entre chacune des couches extérieures et la couche intérieure, une couche adhésive,
**caractérisé en ce que**
• le morceau de polyuréthane de la couche intérieure est constitué de copeaux de polyuréthane hachés et comprimés, mélangés avec des particules d'aluminium et un liant et aillant une densité de 400 - 700 kg/m³, et
• les deux couches extérieures étant constituées de plaques d'aluminium, les plaques d'aluminium ayant une épaisseur de 0,40 mm à 1,00 mm, et
• la couche adhésive étant constituée d'un prépolymère PUR monocomposant avec une couche époxy d'adhérente.

2. Pièce moulée selon la revendication 1, **caractérisée en ce qu'**elle est plane et possède la forme d'une plaque.

3. Pièce moulée selon l'une des revendications 1 ou 2, **caractérisée en ce que** la pièce de polyuréthane de la couche interne a une densité de 550 - 600 kg/m³.

4. Pièce moulée selon l'une des revendications 1 à 3, **caractérisée en ce que** la plaque d'aluminium est peinte avec une peinture polyester d'une épaisseur de 10 à 25 µm comme couche extérieure.

5. Pièce moulée selon l'une des revendications 1 à 3, **caractérisée en ce que** les particules d'aluminium sont des copeaux d'aluminium d'un poids de 0,001 à 0,5 g.

6. Procédé de fabrication d'une pièce moulée selon l'une quelconque des revendications 1 à 5, comprenant les étapes de procédé suivantes
• hacher une mousse de polyuréthane dans un broyeur pour obtenir des copeaux de polyuréthane, et
• ajouter un liant aux copeaux de polyuréthane et les mélanger pour former un mélange, et comprimer le mélange ainsi obtenu en une pièce de polyuréthane, et
• appliquer une couche adhésive sur au moins une face du morceau de polyuréthane, et
• presser une couche d'aluminium sur le côté de la pièce de polyuréthane sur lequel la couche adhésive est appliquée,
**caractérisé en ce que**
• des particules d'aluminium sont ajoutées aux copeaux de polyuréthane avant le pressage, et
• **en ce que** le pressage en un morceau de polyuréthane est effectué à une pression et pendant une durée telles que la pièce (morceau) de polyuréthane ait une densité de 400 - 700 kg/m³ après la compression, et
• **en ce que** la couche adhésive est constituée d'un prépolymère PUR monocomposant et une couche d'adhérence époxy est appliquée sur la face de la plaque d'aluminium orientée vers la couche adhésive.

7. Procédé de fabrication d'une pièce moulée selon la revendication 6, **caractérisé en ce que** le pressage en une pièce de polyuréthane est effectué avec une pression et une durée telles que la pièce de polyuréthane a une densité de 550 à 600 kg/m³ après le pressage.

8. Utilisation d'une pièce moulée selon l'une quelconque des revendications 1 à 5 pour la fabrication de pièces de mobilier.

9. Utilisation d'une pièce moulée selon la revendication 8, **caractérisée en ce que**, la fabrication de la pièce de mobilier est réalisée en perçant un filet de vis dans la pièce moulée et en vissant au moins deux pièces moulées pour former un meuble.

10. Meuble fabriqué à partir d'une pièce moulée selon l'une quelconque des revendications 1 à 5.
